# EUROPEAN PATENT SPECIFICATION

(11) **EP 2 408 988 B1**
(45) Date of publication and mention of the grant of the patent: **24.04.2019**
(21) Application number: 10749437.9
(22) Date of filing: 08.03.2010
(51) Int. Cl.: B32B 17/10, B32B 3/02, B32B 3/06, B32B 7/02, E06B 3/24

(54) **LIGHT WEIGHT GLASS LAMINATES**
LEICHTGEWICHTIGE GLASLAMINATE
STRATIFIES EN VERRE LEGERS

(30) Priority: 06.03.2009 US 157993 P; 03.06.2009 US 183779 P; 06.11.2009 US 258761 P
(43) Date of publication of application: 25.01.2012
(73) Proprietor: E. I. du Pont de Nemours and Company, Wilmington, DE 19898 (US)
(72) Inventor: TAKAGI, Naoto, Yokohama 224-0061 (JP); KOISHIKAWA, Jun, Sagamihara City Kanagawa Prefecture, 2252-0334 (JP); PROOST, Kristof, 2620 Hemiksem (BE); KAPUR, Jane, Kennett Square, Pennsylvania 19348-2655 (US); SMITH, Charles, Anthony, Vienna, West Virginia 26105 (US); STELZER, Ingo, 14467 Potsdam (DE)
(74) Representative: Dannenberger, Oliver Andre
(86) International application number: PCT/US2010/026515
(87) International publication number: WO 2010/102282

(56) References cited:
- US-A- 4 799 346
- US-A- 4 799 346
- US-A- 4 906 703
- US-A- 5 763 062
- US-A1- 2001 008 695
- US-A1- 2004 226 231
- US-A1- 2007 051 452
- US-A1- 2007 154 694
- US-A1- 2008 105 371
- US-A1- 2008 302 461
- US-B1- 6 432 522
- US-B1- 6 737 151

## Description

### FIELD OF THE INVENTION

The present invention is directed to light weight glass laminates having ionomeric interlayers. In particular, the weight of the glass laminates is reduced by reducing the thickness of at least one glass layer to 0.1 to 0.8 mm. Light weight glass laminates may be used in light weight frames, or in frameless mounting systems.

### BACKGROUND OF THE INVENTION

Glass laminates, or laminated glass, have been used commercially for almost a century. One type of glass laminate, safety glass, has been widely used in the automobile industry in windshields or side windows. These materials are characterized by high impact and penetration resistance. In addition, a particular advantage is that, when shattered, safety glass does not scatter glass shards and debris. More recently, glass laminates have also been incorporated into building structures as windows, walls and stairs.

A typical glass laminate consists of a sandwich of two glass sheets or panels bonded together by a thick polymeric interlayer sheet. In some applications, one of the glass sheets may be replaced with an optically clear rigid polymeric sheet, such as a polycarbonate sheet or a hardcoated polyester film. Safety laminates have further evolved to include multiple layers of glass and optionally also polymeric sheets or films bonded together by the polymeric interlayer sheets.

The interlayers used in glass laminates are typically made from relatively thick polymer sheets, which exhibit toughness and bondability to the glass in the event of a crack or crash. Widely used interlayer materials include complex, multicomponent compositions based on poly(vinyl butyral) (PVB), poly(urethane) (PU), poly(ethylene vinyl acetate) (EVA), partially neutralized poly(ethylene (meth)acrylic acid) (ionomers), and the like.

In the past, to provide glass laminates with sufficient strength, it has been necessary to use glass sheets with a significant thickness, e.g., about 2 mm or higher. Because the glass laminates are often used as automobile components or incorporated into building structures where weight and shatter resistance are both of concern, there is still a need to reduce the weight of the glass laminates, while maintaining a high degree of mechanical strength.

Moreover, when glass laminates are installed and used in automobiles or building structures, they are often fixed within a frame and mounted on a support structure. The frames are commonly made of rigid materials such as metals or plastics. Metal frames have been made from steel, aluminum, titanium, brass, lead, chrome, copper, and combinations or alloys of two or more of these matasl, for example. Plastic frames have been made from polycarbonate, polyurethane, nylon, and combinations of two or more of these materials, for example. It is also desirable to reduce the weight of the frames and mounting systems.

Finally, it may be desirable to mount a frameless glass laminate. To be successful in a frameless end use, a glass laminate would need to have a light weight construction and superior moisture resistance and weatherability.

### SUMMARY OF THE INVENTION

Provided herein are light weight glass laminates having ionomeric interlayer sheets and at least one glass layer. The glass laminates comprise a thin glass sheet and an ionomeric interlayer sheet, said thin glass sheet having a thickness of 0.1 to 0.8 mm, wherein the ionomeric interlayer sheet comprises an ionomer that is an ionic neutralized derivative of a precursor acid copolymer comprising copolymerized units of an α-olefin having 2 to 10 carbon atoms and 18 to 30 wt% of copolymerized units of an α,β-ethylenically unsaturated carboxylic acid having 3 to 8 carbons, based on a total weight of the precursor acid copolymer, wherein 5% to 90% of a total content of the α,β-ethylenically unsaturated carboxylic acid present in the precursor acid copolymer have been neutralized, and further wherein said ionomer has a Young's modulus of 200 to 600 MPa, as measured in accordance with ASTM D5026 at 30°C and with 1 minute of load duration. In particular, the weight of the glass laminates is reduced by reducing the thickness of the at least one glass layer to 0.1 to 0.8 mm. The light weight laminates retain favorable performance properties such as have good Pummel adhesion levels, good moisture resistance, and low stress. Further provided are lightweight glass laminates equipped with integral mounting devices.

The advantages and features of novelty that characterize the invention are pointed out with particularity in the claims annexed hereto and forming a part hereof. For a better understanding of the invention, its advantages, and the objects obtained by its use, however, reference should be made to the drawings which form a further part hereof, and to the accompanying descriptive matter, in which there is illustrated and described one or more preferred embodiments of the invention.

### BRIEF DESCRIPTION OF THE DRAWINGS

FIG. 1A is a view in cross-section of a glass laminate depicting two mounting devices.
FIG. 1B is a plan view of a glass laminate comprising two mounting devices.
FIG. 2 is a view in cross-section of a glass laminate depicting two mounting devices.
FIG. 3 is a plan view of a glass laminate comprising four mounting devices.
FIG. 4 is a plan view of a glass laminate comprising four mounting devices.

### DETAILED DESCRIPTION OF THE INVENTION

The following definitions apply to the terms as used throughout this specification, unless otherwise limited in specific instances.

Moreover, unless otherwise defined, all technical and scientific terms used herein have the same meaning as commonly understood by one of ordinary skill in the art to which this invention belongs. In case of conflict, the present specification, including the definitions herein, will control.

Although methods and materials similar or equivalent to those described herein can be used in the practice or testing of the invention, suitable methods and materials are described herein.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such.

The term "or", as used herein, is inclusive; more specifically, the phrase "A or B" means "A, B, or both A and B". Exclusive "or" is designated herein by terms such as "either A or B" and "one of A or B", for example.

In addition, the ranges set forth herein include their endpoints unless expressly stated otherwise in limited circumstances. Further, when an amount, concentration, or other value or parameter is given as a range, one or more preferred ranges or a list of upper preferable values and lower preferable values, this is to be understood as specifically disclosing all ranges formed from any pair of any upper range limit or preferred value and any lower range limit or preferred value, regardless of whether such pairs are separately disclosed.

Moreover, where a range of numerical values is recited herein, unless otherwise stated in specific circumstances, the range is intended to include the endpoints thereof, and all integers and fractions within the range. It is not intended that the scope of the invention be limited to the specific values recited when defining a range. Finally, when the term "about" is used in describing a value or an end-point of a range, the disclosure should be understood to include the specific value or end-point referred to.

When materials, methods, or machinery are described herein with the term "known to those of skill in the art", or a synonymous word or phrase, the term signifies that materials, methods, and machinery that are conventional at the time of filing the present application are encompassed by this description. Also encompassed are materials, methods, and machinery that are not presently conventional, but that will have become recognized in the art as suitable for a similar purpose.

As used herein, the terms "comprises," "comprising," "includes," "including," "containing," "characterized by," "has," "having" or any other synonym or variation thereof refer to a non-exclusive inclusion. For example, a process, method, article, or apparatus that is described as comprising a particular list of elements is not necessarily limited to those particularly listed elements but may further include other elements not expressly listed or inherent to such process, method, article, or apparatus.

The transitional phrase "consisting essentially of" limits the scope of a claim to the specified materials or steps and those that do not materially affect the basic and novel characteristic(s) of the claimed invention. "A 'consisting essentially of claim occupies a middle ground between closed claims that are written in a 'consisting of format and fully open claims that are drafted in a 'comprising' format."

Where an invention or a portion thereof is described with an open-ended term such as "comprising," it is to be understood that, unless otherwise stated in specific circumstances, this description also includes a description of the invention using the term "consisting essentially of' as they are defined above.

The indefinite articles "a" and "an" are employed to describe elements and components of the invention. The use of these articles means that one or at least one of these elements or components is present. Although these articles are conventionally employed to signify that the modified noun is a singular noun, as used herein the articles "a" and "an" also include the plural, unless otherwise stated in specific instances. Similarly, the definite article "the", as used herein, also signifies that the modified noun may be singular or plural, again unless otherwise stated in specific instances.

As used herein, the term "copolymer" refers to polymers comprising copolymerized units or residues resulting from copolymerization of two or more comonomers. In this connection, a copolymer may be described herein with reference to its constituent comonomers or to the amounts of its constituent comonomers, for example "a copolymer comprising ethylene and 9 weight % of acrylic acid", or a similar description. Such a description may be considered informal in that it does not refer to the comonomers as copolymerized units; in that it does not include a conventional nomenclature for the copolymer, for example International Union of Pure and Applied Chemistry (IUPAC) nomenclature; in that it does not use product-by-process terminology; or for another reason. As used herein, however, a description of a copolymer with reference to its constituent comonomers or to the amounts of its constituent comonomers means that the copolymer contains copolymerized units (in the specified amounts when specified) of the specified comonomers. It follows as a corollary that a copolymer is not the product of a reaction mixture containing given comonomers in given amounts, unless expressly stated in limited circumstances to be such.

The term "acid copolymer" refers to a polymer comprising copolymerized units of an α-olefin, an α,β-ethylenically unsaturated carboxylic acid, and optionally other suitable comonomer(s), such as an α,β-ethylenically unsaturated carboxylic acid ester.

The term "ionomer" refers to a polymer that is produced by partially or fully neutralizing an acid copolymer as described above. More specifically, the ionomer comprises ionic groups that are metal ion carboxylates, for example, alkali metal carboxylates, alkaline earth metal carboxylates, transition metal carboxylates and mixtures of such carboxylates. Such polymers are generally produced by partially or fully neutralizing the carboxylic acid groups of precursor or parent polymers that are acid copolymers, as defined herein, for example by reaction with a base. An example of an alkali metal ionomer as used herein is a sodium ionomer (or sodium neutralized ionomer), for example a copolymer of ethylene and methacrylic acid wherein all or a portion of the carboxylic acid groups of the copolymerized methacrylic acid units are in the form of sodium carboxylates.

The term "laminate", as used herein alone or in combined form, such as "laminated" or "lamination" for example, refers to a structure having at least two layers that are adhered or bonded firmly to each other. The layers may be adhered to each other directly or indirectly. "Directly" means that there is no additional material, such as an interlayer or an adhesive layer, between the two layers, and "indirectly" means that there is additional material between the two layers.

The materials, methods, and examples herein are illustrative only and, except as specifically stated, are not intended to be limiting.

Finally, all percentages, parts, ratios, and the like set forth herein are by weight, unless otherwise stated in specific instances.

It had been believed that glass laminates, such as safety glass windshields, do not possess adequate strength when fabricated with glass sheets having a thickness of 2 mm or less. It has now been found, however, that when the glass laminate includes an ionomeric interlayer sheet, the thickness of the glass sheets may be reduced. Consequently, the weight of the glass laminate is reduced, and yet its strength and shatter resistant properties are maintained at an acceptable level. Accordingly, provided herein is a glass laminate that comprises one or more thin glass sheets and one or more ionomeric interlayer sheets.

In addition, these lighter glass laminates also enable the use of lighter frames and mounting systems. As used in this context, the term "lighter" may refer to the weight of the frame or mounting system. Alternatively, however, it may refer to the weight that the frame or mounting system is properly rated to support. Moreover, ionomeric interlayer sheets have superior moisture resistance and weatherability. Therefore, glass laminates made with thin glass sheets and ionomeric interlayer sheets may also be suitable for use in frameless mounting systems.

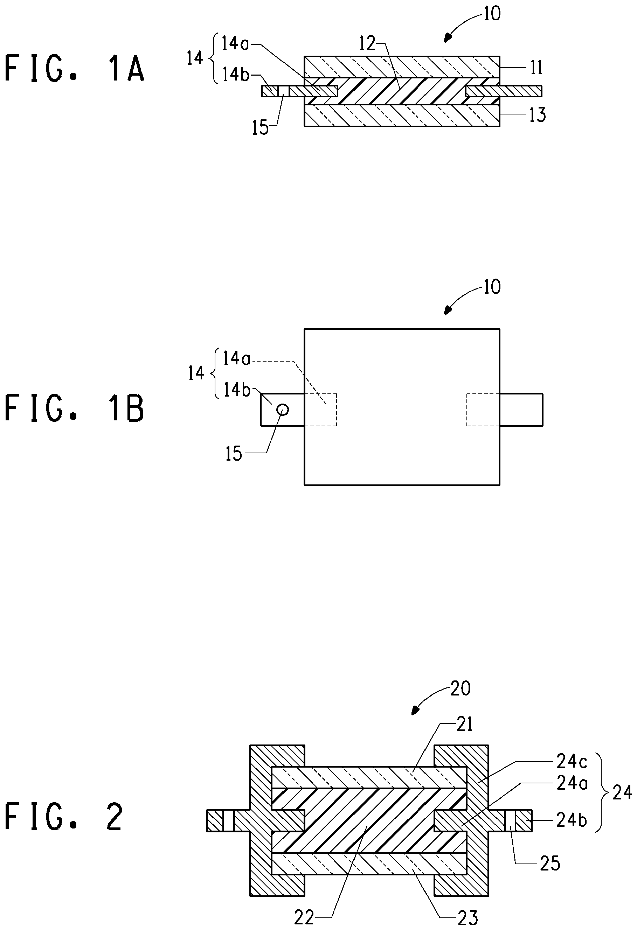

Referring now to the drawings, wherein like reference numerals designate corresponding structure throughout the views, and referring in particular to FIG. 1, a glass laminate **10** includes an ionomeric interlayer sheet **12** laminated between two thin glass sheets **11** and **13.** The laminate **10** also comprises two mounting devices **14,** each of which may be positioned at opposite sides of the laminate. In particular, each mounting device **14** comprises a first portion **14a** that is bonded to the ionomeric interlayer **12** and a second portion **14b** that is protruding outward from the peripheral edges of the laminate **10.** By "bonded to the ionomeric interlayer", it is meant that the first portion **14a** of the mounting device **14** is bonded between the ionomeric interlayer **12** and one of its adjacent layers (thin glass sheets **11** and **13,** in FIG.1), or embedded within the interlayer **12,** or bonded between two sublayers that are eventually bonded to form the final ionomeric interlayer **12.**

Any suitable material may be used in forming the mounting device(s) **14.** More specifically, the mounting device **14** may be fabricated from any material(s) that are sufficiently durable to withstand the stress of supporting the glass laminate **10.** In addition, the mounting device **14** must also be capable of withstanding any additional forces that may be applied to the glass laminate **10,** such as for example the force of wind on a window, or the force of a pressure difference between the interior and exterior of an automobile or a building. Accordingly, the at least one mounting device **14** may be made of a sufficiently tough metal, such as steel, aluminum, titanium, brass, lead, chrome, copper, or combinations or alloys of two or more of these metals. Alternatively, the at least one mounting device **14** may be made of a sufficiently tough plastic, such as polycarbonate, polyurethane, nylon, or a combination of two or more of these plastics.

Still referring to FIG. 1, there may be an anchoring means **15** comprised in the second portion of the mounting device **14b.** Any type of anchoring means **15** that can be used to fix the laminate **10** to support structures can be used here. For example, as illustrated in FIGS. 1A and **1B****,** the anchoring means **15** may be a hole in the second portion **14b** of the mounting device **14,** which can be used to receive a screw to fix the laminate **10** onto a support structure. Other suitable anchoring means **15** include, without limitation, means similar to screws, such as nails and bolts. Anchoring means **15** that do not require a hole include a clamp or similar device that secures the laminate **10** to the frame via the mounting device **14.** A clamp may be secured to the frame or to the mounting device **14;** therefore, it may "clamp" the frame, or it may "clamp" the mounting device **14.**

In addition, mounting devices **14** are depicted as tabs or coupons having a size that is small relative to the length of the edges of the laminate **10.** Other configurations are possible, however, including mounting devices **14** that are closer in length to the length of the edges of the laminate **10.** Longer mounting devices **14** may be equipped with a plurality of anchoring means **15.**

Referring now to FIG. 2, glass laminate **20** has a structure that is similar to the structure of glass laminate **10** depicted in FIGS. 1A and 1B. It includes ionomeric interlayer **22,** thin glass sheets **21** and **23,** and mounting device **24** comprising a first portion **24a** that is bonded to the ionomeric interlayer **22** and a second portion **24b** that is protruding outward from the peripheral edges of the laminate **20.** Here again, second portion **24b** is equipped with anchoring means **25,** depicted as a hole in the second portion **24b** of the mounting device **24.** Mounting device **24,** however, further comprises a third portion **24c** that forms a cover over the peripheral edges of the laminate **20.**

Clearly, if extended along all four edges of a quadrangular laminate **20,** four mounting devices **24** would form a type of frame. In addition, extended mounting devices **24** may be equipped with a plurality of anchoring means **25.** It is not necessary, however, for the mounting devices **24** to have this configuration, however. Like mounting devices **14** depicted in FIGS. 1A and 1B, mounting devices **24** depicted in FIG. 2 may have a size that is small relative to the length of the edges of the laminate **20.** In addition, third portion **24c** may form a cover over a portion of the peripheral edge that is equal to the portion from which mounting device **24** protrudes. Alternatively, third portion **24c** may form a cover over a portion of the peripheral edge that is greater than or less than the portion from which mounting device **24** protrudes. Also clearly, a second type of frame is formed by a configuration of mounting devices **24** in which four cover portions **24c** extend over the entirety of the peripheral edges, even though the mounting devices **24** have a length that is small compared to the length of the peripheral edges.

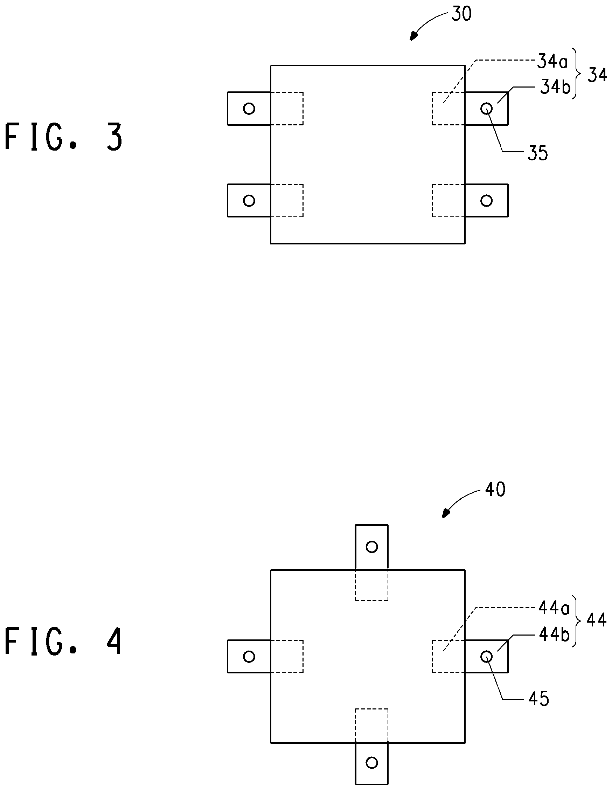

Referring now to FIG. 3, glass laminate **30** also has a structure that is similar to the structure of glass laminate **10** depicted in FIGS. 1A and 1B. It comprises at least one ionomeric interlayer sheet laminated between at least two glass sheets, one or both of which is a thin glass sheet. Glass laminate **30,** however, includes two pairs of mounting devices **34.** The members of each pair are attached to opposite peripheral edges of the laminate **30.** Moreover, mounting devices **34** also comprise a first portion **34a** that is bonded to the ionomeric interlayer and a second portion **34b** that is protruding outward from the peripheral edges of the laminate **30.** Here again, second portion **34b** is equipped with anchoring means **35,** depicted as a hole in the second portion **34b** of the mounting device **34.** Although not depicted in the Drawings, mounting devices **34** may have a structure similar to that of mounting devices **24** in laminate **20** shown in FIG. 2. In particular, they may also be equipped with a third portion that forms a cover over the peripheral edges of the laminate **30.**

Referring now to FIG. 4, glass laminate **40** has a structure that is similar to the structure of glass laminate **10** depicted in FIGS. 1A and 1B. It comprises at least one ionomeric interlayer sheet laminated between at least two glass sheets, one or both of which is a thin glass sheet. In addition, glass laminate **40** also includes two pairs of mounting devices **44,** although these mounting devices are arranged in a different configuration from that depicted in FIG. 3. In glass laminate **40,** one mounting device **44** is attached to each of the four peripheral edges of the laminate **40.** Similarly to the other mounting devices **14, 24** and **34,** mounting devices **44** also comprise a first portion **44a** that is bonded to the ionomeric interlayer and a second portion **44b** that is protruding outward from the peripheral edges of the laminate **40.** Here again, second portion **44b** is equipped with anchoring means **45,** depicted as a hole in the second portion **44b** of the mounting device **44.** Finally, although not depicted in the Drawings, mounting devices **44** may have a structure similar to that of mounting devices **24** in laminate **20** shown in FIG. 2. In particular, they may also be equipped with a third portion that forms a cover over the peripheral edges of the laminate **40.**

The term "thin glass sheet" as used herein refers to a glass sheet or film having a thickness of 0.1 to 0.8 mm, or 0.2 to 0.7 mm, or 0.3 to 0.7 mm, or 0.4 to 0.7 mm, or 0.5 to 0.7 mm. The thin glass sheets may be selected from any suitable types of glass sheets, such as block or rolled thin glass sheets. Some types of thin glass sheets have been used as substrates in liquid crystal devices and are commercially available from, e.g., Praezisions Glas & Optik GmbH (Germany), Pilkington (Toledo, OH), Matsunami Glass Ind., Ltd. (Japan), Nippon Sheet Glass Company, Ltd. (Japan), Nippon Electric Glass Co., Ltd. (Japan), and Asahi Glass Co., Ltd. (Japan).

The ionomeric interlayer sheet comprises an ionomer that is an ionic neutralized derivative of a precursor acid copolymer comprising copolymerized units of an α-olefin having 2 to 10 carbon atoms and 18 to 30 wt%, or 20 to 25 wt%, or 21 to 24 wt%, of copolymerized units of an α,β-ethylenically unsaturated carboxylic acid having 3 to 8 carbons, based on the total weight of the precursor acid copolymer.

Suitable α-olefin comonomers include, but are not limited to, ethylene, propylene, 1-butene, 1-pentene, 1-hexene, 1-heptene, 3 methyl-1-butene, 4-methyl-1-pentene, and the like and combinations of two or more of these olefins. In some preferred ionomers, the α-olefin is ethylene.

Suitable a,β-ethylenically unsaturated carboxylic acid comonomers include, but are not limited to, acrylic acids, methacrylic acids, itaconic acids, maleic acids, maleic anhydrides, fumaric acids, monomethyl maleic acids, and combinations of two or more of these acids. In one preferred ionomer, the α,β-ethylenically unsaturated carboxylic acid is selected from acrylic acids, methacrylic acids, and combinations of acrylic acids and methacrylic acids. In another preferred ionomer, the α,β-ethylenically unsaturated carboxylic acid is methacrylic acid.

The precursor acid copolymers may further comprise copolymerized units of one or more other comonomer(s), such as unsaturated carboxylic acids having 2 to 10, or preferably 3 to 8 carbons, or derivatives thereof. Suitable acid derivatives include acid anhydrides, amides, and esters. Esters are preferred. Specific examples of preferred esters of unsaturated carboxylic acids include, but are not limited to, methyl acrylates, methyl methacrylates, ethyl acrylates, ethyl methacrylates, propyl acrylates, propyl methacrylates, isopropyl acrylates, isopropyl methacrylates, butyl acrylates, butyl methacrylates, isobutyl acrylates, isobutyl methacrylates, tert-butyl acrylates, tert-butyl methacrylates, octyl acrylates, octyl methacrylates, undecyl acrylates, undecyl methacrylates, octadecyl acrylates, octadecyl methacrylates, dodecyl acrylates, dodecyl methacrylates, 2-ethylhexyl acrylates, 2-ethylhexyl methacrylates, isobornyl acrylates, isobornyl methacrylates, lauryl acrylates, lauryl methacrylates, 2-hydroxyethyl acrylates, 2-hydroxyethyl methacrylates, glycidyl acrylates, glycidyl methacrylates, poly(ethylene glycol) acrylates, poly(ethylene glycol)methacrylates, poly(ethylene glycol) methyl ether acrylates, poly(ethylene glycol) methyl ether methacrylates, poly(ethylene glycol) behenyl ether acrylates, poly(ethylene glycol) behenyl ether methacrylates, poly(ethylene glycol) 4-nonylphenyl ether acrylates, poly(ethylene glycol) 4-nonylphenyl ether methacrylates, poly(ethylene glycol) phenyl ether acrylates, poly(ethylene glycol) phenyl ether methacrylates, dimethyl maleates, diethyl maleates, dibutyl maleates, dimethyl fumarates, diethyl fumarates, dibutyl fumarates, dimethyl fumarates, vinyl acetates, vinyl propionates, and mixtures of two or more thereof. In one preferred ionomer, the other comonomers are selected from methyl acrylates, methyl methacrylates, butyl acrylates, butyl methacrylates, glycidyl methacrylates, vinyl acetates, and combinations of two or more of these esters. In another preferred ionomer, however, the precursor acid copolymer does not incorporate other comonomers.

Suitable precursor acid copolymer have a melt flow rate (MFR) of about 1 to about 1000 g/10 min, or about 20 to about 900 g/10 min, or about 20 to about 70 g/10 min, or about 70 to about 700 g/10 min, or about 100 to about 500 g/10 min, or about 150 to about 300 g/10 min, as determined in accordance with ASTM method D1238 at 190°C and 2.16 kg.

Finally, suitable precursor acid copolymers may be synthesized as described in U.S. Patent Nos. 3,404,134; 5,028,674; 6,500,888; or 6,518,365, for example.

To obtain the ionomers useful in the ionomeric interlayer sheets, the precursor acid copolymers are partially neutralized by reaction with one or more bases. An example of a suitable procedure for neutralizing the parent acid copolymers is described in U.S. Patent Nos. 3,404,134 and 6,518,365. After neutralization, 5% to 90%, or 10% to 60%, or 20% to 55%, of the hydrogen atoms of carboxylic acid groups present in the precursor acid are replaced by other cations. Stated alternatively, 5% to 90%, or 10% to 60%, or 20% to 55%, of the total content of the carboxylic acid groups present in the precursor acid copolymer are neutralized. In another alternative expression, the acid groups are neutralized to a level of 5% to 90%, or 10% to 60%, or 20% to 55%, based on the total content of carboxylic acid groups present in the precursor acid copolymers as calculated or measured for the non-neutralized precursor acid copolymers.

The ionomers comprise cations as counterions to the carboxylate anions. Suitable cations include any positively charged species that is stable under the conditions in which the ionomer composition is synthesized, processed and used. In some preferred ionomers, the cations used are metal cations, which may be monovalent, divalent, trivalent, multivalent, or mixtures thereof. Useful monovalent metal cations include but are not limited to cations of sodium, potassium, lithium, silver, mercury, copper, and the like, and mixtures thereof. Useful divalent metal cations include but are not limited to cations of beryllium, magnesium, calcium, strontium, barium, copper, cadmium, mercury, tin, lead, iron, cobalt, nickel, zinc, and the like, and mixtures thereof. Useful trivalent metal cations include but are not limited to cations of aluminum, scandium, iron, yttrium, and the like, and mixtures thereof. Useful multivalent metal cations include but are not limited to cations of titanium, zirconium, hafnium, vanadium, tantalum, tungsten, chromium, cerium, iron, and the like, and mixtures thereof. It is noted that when the metal cation is multivalent, complexing agents such as stearate, oleate, salicylate, and phenolate radicals may be included, as described in U.S. Patent No. 3,404,134. In another preferred interlayer, the metal cations used are monovalent or divalent metal cations. In yet another preferred interlayer, the metal cations are selected from sodium, lithium, magnesium, zinc, potassium and mixtures thereof. In yet another preferred interlayer, the metal cations are selected from cations of sodium, zinc and mixtures thereof. In yet another preferred interlayer, the metal cation is sodium cation.

The resulting ionomer may have a MFR of 25 g/10 min or less, or about of 20 g/10 min or less, or about 10 g/10 min or less, or about 5 g/10 min or less, or about 0.7 to about 5 g/10 min, as determined in accordance with ASTM method D1238 at 190°C and 2.16 kg.

The ionomeric interlayer sheet may further contain other additives known within the art. The additives include, but are not limited to, processing aids, flow enhancing additives, lubricants, pigments, dyes, flame retardants, impact modifiers, nucleating agents, anti-blocking agents such as silica, thermal stabilizers, UV absorbers, UV stabilizers, dispersants, surfactants, chelating agents, coupling agents, reinforcement additives, such as glass fiber, fillers and the like. General information about suitable additives, suitable levels of the additives in the ionomeric interlayers, and methods of incorporating the additives into the ionomeric interlayers may be found in reference texts such as, for example, the Kirk Othmer Encyclopedia*,* the Modern Plastics Encyclopedia, McGraw-Hill (New York, 1995) or the Wiley Encyclopedia of Packaging Technology, 2d edition, A.L. Brody and K.S. Marsh, Eds., Wiley-Interscience (Hoboken, 1997). Four types of additives are of note for use in the ionomeric interlayers, specifically thermal stabilizers, UV absorbers, hindered amine light stabilizers (HALS), and silane coupling agents. Further information about these four types of additives, such as preferred examples and suitable levels in ionomeric interlayers, may be found in the reference texts cited above and in U.S. Patent No. 7,641,965, for example.

The ionomeric interlayer sheets have a Young's modulus of 200 to 600 MPa, or 250 to 550 MPa, or 300 to 500 MPa, or 300 to 400 MPa, as determined in accordance with ASTM D5026 at 30°C and 1 minute of load duration. Further, the ionomeric interlayer sheet may have a total thickness of 1 to 120 mils (0.025 to 3 mm), or 5 to 100 mils (0.127 to 2.54 mm), or 5 to 45 mils (0.127 to 1.14 mm), or 10 to 35 mils (0.25 to 0.89 mm), or 10 to 30 mils (0.25 to 0.76 mm). When a glass laminate includes more than one ionomeric interlayer sheet, the thickness of each of the sheets is independently selected.

The ionomeric interlayer sheet may have a smooth or rough surface on one or both sides prior to the lamination process used to prepare the glass laminate. In one laminate, the sheet has rough surfaces on both sides to facilitate de-airing during the lamination process. Rough surfaces can be created by mechanically embossing or by melt fracture during extrusion of the sheets followed by quenching so that surface roughness is retained during handling. The surface pattern can be applied to the sheet through common art processes. For example, the as-extruded sheet may be passed over a specially prepared surface of a die roll positioned in close proximity to the exit of the die which imparts the desired surface characteristics to one side of the molten polymer. Thus, when the surface of such a die roll has minute peaks and valleys, the polymer sheet cast thereon will have a rough surface on the side that is in contact with the roll, and the rough surface generally conforms respectively to the valleys and peaks of the roll surface. Such die rolls are described in, e.g., U.S. Patent No. 4,035,549 and U.S. Patent Publication No. 20030124296.

The ionomeric interlayer sheets can be produced by any suitable process. For example, the sheets may be formed through dipcoating, solution casting, compression molding, injection molding, lamination, melt extrusion casting, blown film, extrusion coating, tandem extrusion coating, or by any other procedures that are known to those of skill in the art. Preferably, the sheets are formed by an extrusion method, such as melt extrusion casting, melt coextrusion casting, melt extrusion coating, or tandem melt extrusion coating processes.

In addition to one or more thin glass sheets and one or more ionomeric interlayer sheets, the glass laminates may further comprise additional films, rigid sheets, or other non-ionomeric polymeric interlayer sheets.

Suitable additional films include, without limitation, metal films, such as aluminum foil, and polymeric films. Suitable polymeric film materials include, but are not limited to, polyesters (e.g., poly(ethylene terephthalate) and poly(ethylene naphthalate)), polycarbonates, polyolefins (e.g., polypropylene, polyethylene, and cyclic polyloefins), norbornene polymers, polystyrenes (e.g., syndiotactic polystyrene), styrene-acrylate copolymers, acrylonitrile-styrene copolymers, polysulfones (e.g., polyethersulfone, and polysulfone), polyamides, polyurethanes, acrylic polymers, cellulose acetates (e.g., cellulose acetate and cellulose triacetates), cellophanes, vinyl chloride polymers (e.g., poly(vinyl chloride) and poly(vinylidene chloride)), fluoropolymers (e.g., poly(vinyl fluoride), poly(vinylidene fluoride), polytetrafluoroethylene, and ethylene-tetrafluoroethylene copolymers), and combinations of two or more of these materials.

When a polymeric film is incorporated as an outside surface layer of the glass laminate, the outside surface may be provided with an abrasion resistant hardcoat. Any material known for use in abrasion resistant hardcoats may be used. For example, the hardcoat may comprise polysiloxanes or cross-linked (thermosetting) polyurethanes. Also suitable are oligomeric-based coatings, such as those described in U.S. Patent Application Publication No. 2005/0077002, which are prepared by the reaction of (A) a hydroxyl-containing oligomer with isocyanate-containing oligomer or (B) an anhydride-containing oligomer with epoxide-containing compound. In certain laminates, the hardcoat may comprise a polysiloxane abrasion resistant coating, such as those described in U.S. Patent Nos. 4,177,315; 4,469,743; 5,415,942; and 5,763,089.

Suitable rigid sheets comprise a material with a tensile modulus of 690 MPa or higher as determined in accordance with ASTM D-638. In one laminate, the rigid sheets are derived from any suitable conventional glass sheets with a thickness of about 2 mm or more. The glass sheets may include, but are not limited to, window glass, plate glass, silicate glass, sheet glass, low iron glass, tempered glass, tempered CeO-free glass, and float glass, but also colored glass, specialty glass (such as those containing ingredients to control solar heating), coated glass (such as those sputtered with metals (e.g., silver or indium tin oxide) for solar control purposes), low E-glass, Toroglas® glass (Saint-Gobain N.A. Inc., Trumbauersville, PA), Solexia™ glass (PPG Industries, Pittsburgh, PA), and Starphire® glass (PPG Industries). In a further laminate, the other rigid sheets may be formed of metal, ceramic, or polymers selected from polycarbonates, acrylics, polyacrylates, cyclic polyolefins, metallocene-catalyzed polystyrenes, and combinations of two or more thereof.

The additional polymeric interlayer sheets may be formed of any suitable polymeric material, such as, poly(vinyl acetal) (e.g., poly(vinyl butyral)), poly(vinyl chloride), polyurethanes, poly(ethylene vinyl acetate), ethylene acid copolymers, or combinations of two or more of these materials. Blends and combinations of these materials with the ionomers described above are also suitable.

The glass laminates comprise a thin glass sheet with a thickness of 0.1 to 0.8 mm, that is laminated to one side (or to a first side) of the ionomeric interlayer sheet. By "laminated", it is meant that, within a laminated structure, the two layers are bonded either directly (i.e., without any additional material between the two layers) or indirectly (i.e., with additional material, such as interlayer or adhesive materials, between the two layers). Accordingly, the ionomeric interlayer sheet may be directly bonded to the thin glass sheet, or, the ionomeric interlayer sheet may be bonded to the thin glass sheet by way of one or more layers of adhesive or primer materials.

In one glass laminate, the ionomeric interlayer comprises an ionomer that is an ionic neutralized derivative of a precursor acid copolymer comprising copolymerized units of an α-olefin having 2 to 10 carbon atoms and 18 to 30 wt% of copolymerized units of an α,β-ethylenically unsaturated carboxylic acid having 3 to 8 carbons, based on a total weight of the precursor acid copolymer, and wherein 5% to 90% of the total content of the α,β-ethylenically unsaturated carboxylic acid present in the precursor acid copolymer has been neutralized. In another glass laminate, the precursor acid copolymer comprises 20 to 25 wt% of copolymerized units of the α,β-ethylenically unsaturated carboxylic acid, based on the total weight of the precursor acid copolymer, and 10% to 60% of the total content of the α,β-ethylenically unsaturated carboxylic acid present in the precursor acid copolymer has been neutralized.

Another glass laminate further comprises an additional film or rigid sheet, such as those described above, laminated to the other side (or to a second side) of the ionomeric interlayer sheet. The glass laminate may comprise a thin glass sheet having a thickness of 0.1 to 0.8 mm, which is laminated to an ionomeric interlayer sheet, which is further laminated to a second glass sheet that is a conventional glass sheet with a thickness of about 2 mm or more. Alternatively, the glass laminate may comprise a first thin glass sheet with a thickness of 0.1 to 0.8 mm, which is laminated to an ionomeric interlayer sheet, which is further laminated to second thin glass sheet with a thickness of 0.1 to 0.8 mm. Also, the glass laminate may comprise a thin glass sheet with a thickness of 0.1 to 0.8 mm, which is laminated to an ionomeric interlayer sheet, which is further laminated to a polymeric film, such as a polyester (e.g., poly(ethylene terephthalate)) film, and wherein the polymeric film may have a layer of hardcoat applied to its outside surface.

In another laminate, the ionomeric interlayer sheet has a first side that is laminated to the thin glass sheet. The glass laminate further comprises a rigid sheet laminated to a second side of the ionomeric interlayer sheet. The rigid sheet is preferably a second glass sheet having a thickness of about 2 mm or more. Alternatively, the rigid sheet comprises a polymeric material.

In another laminate, the glass laminate may comprise n layers of films and/or rigid sheets and n-1 layers of polymeric interlayer sheets, wherein (i) n is an integer of 2-10; (ii) each adjacent pair of the films and/or rigid sheets are interspaced by one of the polymer interlayer sheets; and (iii) one or more of the n layers of the films and/or rigid sheets are formed of the thin glass sheets described above; and (iv) one or more of the n-1 layers of the polymeric interlayer sheets comprise the ionomer composition described above.

In yet another laminate, the glass laminate may comprise n layers of the thin glass sheets as described above and n-1 layers of the ionomeric interlayer sheets, as described above, wherein (i) n is an integer of 2-10; (ii) each of the n layers of thin glass sheets independently has a thickness of 0.1 to 0.8 mm, and (iii) each adjacent pair of the thin glass sheets are interspaced by one of the ionomeric interlayer sheets.

Any suitable lamination process may be used to prepare the glass laminate described herein. First, if desired, one or both surfaces of any of the component layers of the glass laminate may undergo any suitable adhesion enhancing treatment prior to the lamination process. Suitable adhesion treatments are described in the reference texts cited above and in U.S. Patent No. 7,625,627 with respect to the polymeric film, for example. Next, in an autoclave process, the component layers of a glass laminate are stacked up in the desired order to form a pre-lamination assembly. The assembly is then placed into a bag capable of sustaining a vacuum ("a vacuum bag"). A vacuum ring may be substituted for the vacuum bag. One type of suitable vacuum bag is described in U.S. Patent No. 3,311,517. The air is drawn out of the vacuum bag using a vacuum line or other means, the bag is sealed while the vacuum is maintained (e.g., at about 27 to 28 in Hg (689-711 mm Hg)), and the sealed bag is placed in an autoclave. The sealed bag containing the assembly is processed in the autoclave at a pressure of about 150 to about 250 psi (about 11.3 to 18.8 bar), and at a temperature of about 110°C to about 180°C, or about 120°C to about 160°C, or about 135°C to about 160°C, for about 10 to about 90 min, or about 20 to about 70 min, or about 25 to about 60 min. Following the heat and pressure cycle, the air in the autoclave is cooled without adding additional gas; thus, the pressure inside the autoclave is allowed to decrease. After about 20 min of cooling, the autoclave is vented to the atmosphere and the sealed bag containing the laminate is removed from the autoclave.

Alternatively, the pre-lamination assembly may be heated in an oven at about 80°C to about 120°C, or about 90°C to about 100°C, for about 20 to about 40 min. Thereafter, the heated assembly is passed through a set of nip rolls so that the air in the void spaces between the individual layers may be expelled and the edge of the assembly may be sealed. The assembly at this stage is referred to as a pre-press assembly.

The pre-press assembly may then be placed in an air autoclave and processed at a temperature of from about 120°C to about 160°C, or about 135°C to about 160°C, and at a pressure of about 100 to about 300 psi (about 6.9 to about 20.7 bar), or about 200 psi (13.8 bar). These conditions may be maintained for about 15 to about 60 min, or about 20 to about 50 min. Following the heat and pressure cycle, the air in the autoclave is cooled without adding additional gas. After about 20 to about 40 min of cooling, the excess air pressure is vented and the laminated products are removed from the autoclave.

The glass laminate may also be produced via non-autoclave processes. Such non-autoclave processes are described, for example, in U.S. Patent Nos. 3,234,062; 3,852,136; 4,341,576; 4,385,951; 4,398,979; 5,536,347; 5,853,516; 6,342,116; and 5,415,909, U.S. Patent Publication No. 20040182493, European Patent No. EP1235683 B1, and PCT Patent Publication Nos. WO9101880 and WO03057478. Generally, the non-autoclave processes include heating the pre-lamination assembly and the application of vacuum, pressure or both. For example, the assembly may be successively passed through heating ovens and nip rolls.

The glass laminates described herein may be useful in a number of industries, such as, construction, automotive, aerospace, and marine. For example, they can be use as glazings in buildings, automobiles, airplanes, and ships.

The following examples are provided to describe the invention in further detail. These examples, which set forth a preferred mode presently contemplated for carrying out the invention, are intended to illustrate and not to limit the invention.

### EXAMPLES

In each of the following examples, two sets of identical glass laminates were prepared, with one set subjected to a Pummel adhesion test, moisture test, and stress test shortly after lamination and the other set subjected to the Pummel adhesion, moisture, and stress tests after undergoing 50 thermal cycles in which the temperature is alternated between -40°C and 85°C, in accordance to IEC 61646.

Each of the glass laminates prepared in Example E1 has dimensions of 15x15 cm and a layered structure of "glass sheet 1/ionomeric interlayer sheet/glass sheet 2", wherein "glass sheet 1" is a 2.3 mm thick glass sheet manufactured by PPG Industries, Pittsburgh, PA; "glass sheet 2" is a 0.7 mm thick glass sheet manufactured by Euro-Tech GmbH (Germany); and "ionomeric interlayer sheet" is a 35 mil (0.89 mm) thick SentryGlas® ionomer resin interlayer sheet available from E.I. DuPont de Nemours & Co. of Wilmington, DE (hereinafter "DuPont"). The glass laminates prepared in Example E2 are similar to those prepared in Example E1, except that a pair of 20 cm long, 2 mm wide, and 100 µm thick wires were further embedded between "glass sheet 1" and "ionomeric interlayer sheet" along opposite sides of the laminate and about 2 cm away from the respective edges. The glass laminates prepared in Example E3 were similar to those prepared in Example E2, except that each of the two 20 cm long, 2 mm wide, and 100 µm thick wires has one end protruding from the laminate.

Each of the glass laminates E1, E2 and E3 was prepared by placing the "glass sheet 1/wires if used/ionomeric interlayer sheet/glass sheet 2" assembly in a disposable vacuum bag, maintaining the assembly within the vacuum bag under vacuum for about 20 minutes at room temperature, placing the vacuum bag that contained the assembly into an oven that was set at 90°C for another 20 minutes, removing the assembly from the vacuum bag, and finally subjecting the assembly to an autoclave process that was conducted under conditions that provided a maximum temperature of 145°C for 20 minutes and a maximum plateau pressure of 8.5 bar.

The pummel adhesion value of each laminate was determined by first equilibrating the sample laminate at 25°C +/- 5°C for 1 hour or more and then pummeling the laminate with a 0.5 kg flat headed hammer. The laminate was pummeled in a pattern of rows with 1.25 cm intervals between impact location and 2 cm intervals between rows. The pummel adhesion rating was assigned based on the amount of pulverized glass remaining adhered to the interlayer according to the arbitrary scale set forth in Table 1.

**TABLE I**

| Percentage of Glass Removed from the Laminate Surface | Pummel Adhesion Rating |
|---|---|
| 100 | 0 |
| 95 | 1 |
| 90 | 2 |
| 80 | 3 |
| 60 | 4 |
| 40 | 5 |
| 20 | 6 |
| 10 | 7 |
| 5 | 8 |
| 2 | 9 |
| 0 | 10 |

Two Pummel adhesion values were measured for each laminate, with the "IN" value determined by hammering the laminate on "glass sheet 1" and the "OUT" value determined by hammering the laminate on "glass sheet 2".

The level of moisture increase of each laminate was determined using a Spectrum BX FTIR Spectrometer from Perkin Elmer, Waltham, MA. Specifically, a transmission near infrared (NIR) spectrum was recorded and the moisture band between 1880 and 1990 nm was integrated. The integrated area was then compared to moisture standards to calculate the moisture content in the sample. Moisture gain values were recorded in two positions for each laminate. "Position 1" was a location about 1 cm away from the edge of the laminate, and "Position 2" was a location close to the center of the laminate. In Examples E2 and E3, Position 1 was between the edge and a wire.

The stress developed on each of the laminates was determined visually by observation under crossed polarized lights at angles varying between 180 and 90 degrees. No rainbow-like features indicating stress were observed in the sample laminates.

The data set forth in Table 2 indicate that glass laminates employing a 0.7 mm thick thin glass sheet and a 35 mil (0.89 mm) ionomeric interlayer sheet have good pummel adhesion levels, good moisture resistance, and low stress. This demonstrates that it is feasible to use thin glass sheets as one or both of the outer protective layers in a glass laminate having an ionomeric interlayer, thus reducing the weight of the laminate while maintaining its physical strength.

**TABLE 2**

| Sample | Before Thermal Cycle | | | | | After Thermal Cycle | | | | |
|---|---|---|---|---|---|---|---|---|---|---|
| | Pummel Adhesion | | Moisture | | Stress | Pummel Adhesion | | Moisture | | Stress |
| | In | Out | Pos 1 | Pos 2 | | In | Out | Pos 1 | Pos 2 | |
| E1 | 5 | 7 | 0 | 0 | No | 5 | 7 | 0.05 | 0 | No |
| E2 | 5 | 7 | 0 | 0 | No | 5 | 7 | 0.03 | 0.07 | No |
| E3 | 5 | 7 | 0.09 | 0.01 | No | 5 | 7 | 0.06 | 0.07 | No |

### Comparative Example C1 and Examples E4 and E5

The stress development and deflection in the following hypothetical glazing constructs is calculated by non-linear finite element modeling (FEM) stress analysis. In Example C1, the glazing construct is a 6.5 mm thick polycarbonate sheet. In Example E4, the glazing construct is a laminate of one SentryGlas® ionomeric interlayer sheet (4.56 mm in thickness), available from DuPont, laminated between two thin glass sheets (1 mm in thickness). In Example E5, the glazing construct is a laminate of one SentryGlas® ionomeric interlayer sheet (3.04 mm in thickness) laminated between two thin glass sheets (1 mm in thickness). The glazing construct in each of these Examples has a dimension of 1000x800 mm and is supported on four sides. A uniform load of 2 kPa is applied. The Young's modulus and Poisson ratio for each component of the glazing constructs are listed in Table 3.

**TABLE 3**

| Material | Young's Modulus (MPa) | Poisson Ratio |
|---|---|---|
| Glass | 70,000^{a} | 0.23^{b} |
| SentryGlas® sheet | 15^{c} ; 300^{d} | 0.499^{c} |
| Polycarbonate sheet | 2,300^{e} | 0.4^{e} |

| | | |
|---|---|---|
| Notes: ^{a} Measured in accordance with ENISO1288; ^{b} measured in accordance with EN843; ^{c} measured in accordance with ASTM D5026 at 40°C and 1 day of load duration; ^{d} measured in accordance with ASTM D5026 at 30°C and 1 minute of load duration; and ^{e} measured in accordance with ISO527. | | |

The maximum stress development and deflection of each of the laminates is calculated using SJ-MEPLA (Version 3.0.4 by SJ-Software, Germany). The resulting values are reported in Table 4.

**TABLE 4**

| Sample | Maximum Stress (MPa) | Maximum Deflection (mm) |
|---|---|---|
| C1 | 5.25 | 27.15 |
| E4 | 20.49 | 7.39 |
| E5 | 23.27 | 9.69 |

These results demonstrate that laminates with thin (1 mm) glass sheets and ionomeric interlayers will have higher strength and will show less deflection when compared to polycarbonate sheets.

### Example E6

A series of laminates with a structure of "thin glass sheet (1.1 mm)/ionomeric sheet (60 mil)/thin glass sheet (1.1 mm)" were prepared. The thin glass sheets were UFF™ thin glass obtained from Nippon Sheet Glass Company, Ltd. (Tokyo, Japan) and the ionomer sheets were SentryGlas® sheets obtained from DuPont.

The laminates were then subjected to several European Security Standard tests. In the EN356-P2A test, a steel ball (100 mm in diameter and 4.11 kg in weight) was dropped onto the laminate structure three times from a height of 3 m. The laminates passed this test, as they were not penetrated after the third impact. In the EN356-P3A test, a steel ball (100 mm in diameter and 4.11 kg in weight) was dropped onto the laminate structure three times from a height of 6 m. A first laminate failed this test as the steel ball penetrated the laminate at the third drop; however, a second laminate passed with no penetration after the third drop. Finally, in the EN356-P4A test, a steel ball (100 mm in diameter and 4.11 kg in weight) was dropped onto the laminate structure three times from a height of 9 m. The laminate failed this test as the steel ball penetrated the laminate at the second drop.

### Examples E7 to E14

By a similar lamination process used above, a series of "glass 1/ionomeric interlayer/glass 2" laminates were prepared. The structures of these laminates are set forth in Table 5. The laminates were subjected to the JIS R3205 ball drop test, in which a steel ball with a diameter of 63 mm and a weight of 1.04 kg was first dropped from a height of 120 cm onto the laminate with a dimension of 610x610 mm. If no destruction occurred, the drop was repeated from a height of 150 cm, then 190 cm, then 240 cm, then 300 cm, then 380 cm, and then 480 cm. The results of this experiment are also recorded in Table 5.

**TABLE 5**

| Sample # | Sample Structure | | | Test # | Ball Drop Height (cm) (No Break: OK; Break: X) | | | | | | Crack or Delamination of interlayer |
|---|---|---|---|---|---|---|---|---|---|---|---|
| | Glass 1^{a} (mm) | lonomer Interlayer^{b} (mil) | Glass 2^{a} (mm) | | 120 | 150 | 190 | 240 | 300 | 380 | |
| E7 | 1.1 | 60 | 1.1 | 1 | OK | OK | X | | | | No |
| | | | | 2 | X | | | | | | No |
| | | | | 3 | OK | X | | | | | No |
| E8 | 1.1 | 35 | 1.1 | 1 | OK | OK | OK | X | | | No |
| | | | | 2 | OK | OK | OK | OK | OK | X | N/A |
| | | | | 3 | X | | | | | | No |
| E9 | 0.7 | 60 | 0.7 | 1 | X | | | | | | No |
| | | | | 2 | OK | OK | X | | | | No |
| | | | | 3 | OK | X | | | | | No |
| E10 | 0.7 | 35 | 0.7 | 1 | OK | OK | OK | OK | X | | N/A |
| | | | | 2 | OK | OK | OK | OK | X | | N/A |
| | | | | 3 | OK | OK | X | | | | N/A |
| E11 | 0.55 | 60 | 0.55 | 1 | OK | OK | X | | | | N/A |
| | | | | 2 | OK | OK | OK | OK | X | | No |
| | | | | 3 | X | | | | | | No |
| E12 | 0.55 | 35 | 0.55 | 1 | X | | | | | | No |
| | | | | 2 | Ok | OK | OK | X | | | No |
| | | | | 3 | X | | | | | | No |
| E13 | 0.3 | 60 | 0.3 | 1 | x | | | | | | No |
| | | | | 2 | OK | X | | | | | No |
| | | | | 3 | OK | X | | | | | No |
| E14 | 0.3 | 35 | 0.3 | 1 | OK | OK | X | | | | No |
| | | | | 2 | X | | | | | | No |
| | | | | 3 | X | | | | | | No |

| | | | | | | | | | | | |
|---|---|---|---|---|---|---|---|---|---|---|---|
| a. The glass sheets used here were UFF™ thin glass obtained from Nippon Sheet Glass Company, Ltd. b. The ionomeric interlayer sheets were SentryGlas® sheets obtained from DuPont. | | | | | | | | | | | |

### EXAMPLES E15 AND E16

In Example E15, glass laminates with ionomeric interlayers are prepared. The laminates are exposed to outdoor natural weathering in Florida for 72 months and to outdoor accelerated weathering in Arizona for 96 months equivalent exposure. No delamination, visual defects, edge clouding, or undesired haze change is observed in the laminates after the weathering. Moreover, the laminates' tensile strength remains strong after 4500 hours of laboratory accelerated weathering.

In Example E16, glass laminates with ionomeric interlayers or PVB interlayers are prepared. After humidity freeze testing, no visual defects, delaminations, discoloration or adhesion loss is observed in those laminates with ionomeric interlayers. In laminates with PVB interlayers, however, both edge cloud and delamination are observed after the humidity freeze testing.

### Example E17

The moisture ingress profile of EVA interlayers, PVB interlayers, and ionomeric interlayers laminated between two glass lites (3.2 mm in thickness) has been obtained by Kapur et al. using an FTIR method and using the method of ASTM D7191. See Kapur et al., Proceedings of the Photovoltaic Specialists Conference (PVSC), 2009 34th IEEE; Digital Object Identifier: 10.1109/PVSC.2009.5411235; Publication Year: 2009, Page(s): 001210 - 001214. The data obtained by Kapur et al. demonstrate that moisture ingress into the ionomeric interlayers is less than moisture ingress into the EVA and PVB interlayers. It is also believed that moisture ingress into a glass laminate is not significantly affected by the thickness of the glass layers, if the thickness is at least about 0.1 mm. Accordingly, it is predicted that laminates of ionomeric interlayers between two thin glass sheets have a moisture ingress that is less than, and therefore superior to, that of the PVB laminates studied by Kapur et al.

While certain of the preferred embodiments of the present invention have been described and specifically exemplified above, it is not intended that the invention be limited to such embodiments. It is to be understood, moreover, that even though numerous characteristics and advantages of the present invention have been set forth in the foregoing description, together with details of the structure and function of the invention, the disclosure is illustrative only, and changes may be made in detail, especially in matters of shape, size and arrangement of parts, within the principles of the invention to the full extent indicated by the broad general meaning of the terms in which the appended claims are expressed.

## Claims

1. A glass laminate comprising a thin glass sheet and an ionomeric interlayer sheet, said thin glass sheet having a thickness of 0.1 to 0.8 mm, wherein the ionomeric interlayer sheet comprises an ionomer that is an ionic neutralized derivative of a precursor acid copolymer comprising copolymerized units of an α-olefin having 2 to 10 carbon atoms and 18 to 30 wt% of copolymerized units of an α,β-ethylenically unsaturated carboxylic acid having 3 to 8 carbons, based on a total weight of the precursor acid copolymer, wherein 5% to 90% of a total content of the α,β-ethylenically unsaturated carboxylic acid present in the precursor acid copolymer have been neutralized, and further wherein said ionomer has a Young's modulus of 200 to 600 MPa, as measured in accordance with ASTM D5026 at 30°C and with 1 minute of load duration.

2. The glass laminate of Claim 1, wherein the precursor acid copolymer comprises 20 to 25 wt% of copolymerized units of the α,β-ethylenically unsaturated carboxylic acid, and wherein 10% to 60% of the total content of the α,β-ethylenically unsaturated carboxylic acid present in the precursor acid copolymer have been neutralized.

3. The glass laminate of Claim 1, wherein the ionomeric interlayer sheet has a thickness of 1 to 120 mils (0.025 to 3 mm), preferably of 5 to 45 mils (0.127 to 1.14 mm).

4. The glass laminate of Claim 1, wherein the ionomeric interlayer sheet has a first side and a second side, and wherein the first side is bonded directly to the thin glass sheet.

5. The glass laminate of Claim 4, which further comprises a film or a rigid sheet, the rigid sheet comprising a material with a tensile modulus of 690 MPa or higher as determined in accordance with ASTM D-638, and wherein said film or said rigid sheet is laminated to the second side of the ionomeric interlayer sheet.

6. The glass laminate of Claim 5, wherein the film comprises a polymeric material selected from the group consisting of polyesters, polycarbonates, polyolefins, norbornene polymers, polystyrenes, styrene-acrylate copolymers, acrylonitrile-styrene copolymers, polysulfones, polyamides, polyurethanes, acrylic polymers, cellulose acetates, cellophanes, vinyl chloride polymers, fluoropolymers, and combinations of two or more of these polymeric materials; or wherein the rigid sheet comprises a material selected from the group consisting of a glass, a metal, a ceramic, or a polymeric material selected from the group consisting of polycarbonates, acrylics, polyacrylates, cyclic polyolefins, metallocene-catalyzed polystyrenes, and combinations of two or more of these materials.

7. The glass laminate of Claim 6, wherein the rigid sheet is a second glass sheet, and said second glass sheet has a thickness of 2 mm or more, or wherein the rigid sheet is a second glass sheet, and said second glass sheet has a thickness of 1.5 mm or less.

8. The glass laminate of Claim 1, which further comprises four peripheral edges and at least one mounting device, wherein the at least one mounting device has a first portion thereof bonded to the ionomeric interlayer sheet and a second portion protruding outward from the peripheral edges of the glass laminate.

9. The glass laminate of Claim 8, wherein the at least one mounting device further comprises a third portion that forms a cover over a portion of the peripheral edge from which it protrudes,
or wherein the second portion of the at least one mounting device comprises at least one anchoring means,
or which comprises two mounting devices, and wherein the mounting devices are positioned on opposite peripheral edges of the glass laminate, or which comprises four mounting devices, and wherein two of the mounting devices are positioned on a single edge of the glass laminate, and two of the mounting devices are positioned on the opposite peripheral edge of the glass laminate,
or which comprises four mounting devices, and wherein each of the mounting devices is positioned on a different peripheral edge of the glass laminate.

10. The glass laminate of Claim 8, wherein the at least one mounting device is made of metal or plastic.

11. The glass laminate of Claim 10, wherein the at least one mounting device comprises a metal selected from the group consisting of steel, aluminum, titanium, brass, lead, chrome, copper, and alloys thereof.

12. The glass laminate of claim 1 comprising n layers of films, rigid sheets, or combinations thereof and n-1 layers of polymeric interlayer sheets, wherein (i) n is an integer of 2-10; (ii) each adjacent pair of the n layers of films, rigid sheets, or combinations thereof are interspaced by one of the polymer interlayer sheets; (iii) one or more of the n layers of films, rigid sheets, or combinations thereof is the thin glass sheet having a thickness of 0.1 to 0.8 mm; and (iv) one or more of the n-1 layers of polymeric interlayer sheets is the ionomeric interlayer sheet.

13. The glass laminate of Claim 12, wherein the n layers are n layers of thin glass sheets, and wherein the n-1 layers are ionomeric interlayer sheets, wherein each of the n layers of thin glass sheets independently has a thickness of 0.1 to 0.8 mm, and each adjacent pair of the thin glass sheets is interspaced by one of the ionomeric interlayer sheets.

## Patentansprüche

1. Glaslaminat umfassend eine dünne Glasplatte und eine ionomere Zwischenschichtplatte, wobei die dünne Glasplatte eine Dicke von 0,1 bis 0,8 mm aufweist, wobei die ionomere Zwischenschichtplatte ein Ionomer umfasst, das ein ionisch neutralisiertes Derivat eines sauren Vorläufercopolymers ist, das copolymerisierte Einheiten eines α-Olefins, das 2 bis 10 Kohlenstoffatome aufweist, und 18 bis 30 Gew.-% copolymerisierte Einheiten einer α,ß-ethylenisch ungesättigten Carbonsäure, die 3 bis 8 Kohlenstoffatome aufweist, auf ein Gesamtgewicht des sauren Vorläufercopolymers bezogen, umfasst, wobei 5 % bis 90 % eines Gesamtgehalts der α,ß-ethylenische ungesättigten Carbonsäure, die in dem sauren Vorläufercopolymer vorliegt, neutralisiert worden sind und wobei ferner das Ionomer einen Young'schen Modul von 200 bis 600 MPa, wie ASTM D5026 entsprechend bei 30 °C und mit 1 Minute Belastungsdauer gemessen, aufweist.

2. Glaslaminat nach Anspruch 1, wobei das saure Vorläufercopolymer 20 bis 25 Gew.-% copolymerisierte Einheiten der α,ß-ethylenische ungesättigten Carbonsäure umfasst und wobei 10 % bis 60 % des Gesamtgehalts der α,ß-ethylenisch ungesättigten Carbonsäure, die in dem sauren Vorläufercopolymer vorliegt, neutralisiert worden sind.

3. Glaslaminat nach Anspruch 1, wobei die ionomere Zwischenschichtplatte eine Dicke von 1 bis 120 mil (0,025 bis 3 mm), bevorzugt von 5 bis 45 mil (0,127 bis 1,14 mm) aufweist.

4. Glaslaminat nach Anspruch 1, wobei die ionomere Zwischenschichtplatte eine erste Seite und eine zweite Seite aufweist und wobei die erste Seite direkt an die dünne Glasplatte bondiert ist.

5. Glaslaminat nach Anspruch 4, das ferner eine Folie oder eine steife Platte umfasst, wobei die steife Platte ein Material mit einem Zugmodul von 690 MPa oder höher, wie ASTM D-638 entsprechend bestimmt, umfasst und wobei die Folie oder steife Platte an die zweite Seite der ionomeren Zwischenschichtplatte laminiert ist.

6. Glaslaminat nach Anspruch 5, wobei die Folie ein polymeres Material umfasst ausgewählt aus der Gruppe bestehend aus Polyestern, Polycarbonaten, Polyolefinen, Norbornenpolymeren, Polystyrolen, Styrol-Acrylatcopolymeren, Acrylnitril-Styrolcopolymeren, Polysulfonen, Polyamiden, Polyurethanen, Acrylpolymeren, Celluloseacetaten, Cellophanen, Vinylchloridpolymeren, Fluorpolymeren und Kombinationen von zwei oder mehr dieser polymeren Materialien; oder wobei die steife Platte ein Material umfasst ausgewählt aus der Gruppe bestehend aus einem Glas-, einem Metall-, einem Keramik- oder einem polymeren Material ausgewählt aus der Gruppe bestehend aus Polycarbonaten, Acrylen, Polyacrylaten, cyclischen Polyolefinen, metallocenkatalysierten Polystyrolen und Kombinationen von zwei oder mehr dieser Materialien.

7. Glaslaminat nach Anspruch 6, wobei die steife Platte eine zweite Glasplatte ist und die zweite Glasplatte eine Dicke von 2 mm oder mehr aufweist oder wobei die steife Platte eine zweite Glasplatte ist und die zweite Glasplatte eine Dicke von 1,5 oder weniger aufweist.

8. Glaslaminat nach Anspruch 1, das ferner vier periphere Kanten und mindestens eine Montiervorrichtung umfasst, wobei bei der mindestens einen Montiervorrichtung ein erster Abschnitt davon an die ionomere Zwischenschichtplatte bondiert ist und ein zweiter Abschnitt von den peripheren Kanten des Glaslaminats nach außen hervorragt.

9. Glaslaminat nach Anspruch 8, wobei die mindestens eine Montiervorrichtung ferner einen dritten Abschnitt umfasst, der eine Bedeckung über einen Abschnitt der peripheren Kante bildet, aus der er hervorragt,
oder wobei der zweite Abschnitt der mindestens einen Montiervorrichtung mindestens ein Ankermittel umfasst,
oder der zwei Montiervorrichtungen umfasst und wobei die Montiervorrichtungen an entgegengesetzten peripheren Kanten des Glaslaminats positioniert sind
oder der vier Montiervorrichtungen umfasst und wobei zwei der Montiervorrichtungen an einer einzigen Kante des Glaslaminats positioniert sind und zwei der Montiervorrichtungen an den entgegengesetzten peripheren Kanten des Glaslaminats positioniert sind,
oder der vier Montiervorrichtungen umfasst und wobei jede der Montiervorrichtungen an einer anderen peripheren Kante des Glaslaminats positioniert ist.

10. Glaslaminat nach Anspruch 8, wobei die mindestens eine Montiervorrichtung aus Metall oder Kunststoff hergestellt ist.

11. Glaslaminat nach Anspruch 10, wobei die mindestens eine Montiervorrichtung ein Metall umfasst ausgewählt aus der Gruppe bestehend aus Stahl, Aluminium, Titan, Messing, Blei, Chrom, Kupfer und Legierungen davon.

12. Glaslaminat nach Anspruch 1 umfassend n Lagen von Folien, steifen Platten oder Kombinationen davon und n-1 Lagen von polymeren Zwischenschichtplatten, wobei (i) n eine ganze Zahl von 2-10 ist; (ii) jedes benachbarte Paar der n Lagen von Folien, steifen Platten oder Kombinationen davon durch eine der polymeren Zwischenschichtplatten beabstandet sind; (iii) eine oder mehr der n Lagen von Folien, steifen Platten oder Kombinationen davon die dünne Glasplatte ist, die eine Dicke von 0,1 bis 0,8 mm aufweist; und (iv) eine oder mehr der n-1 Lagen von polymeren Zwischenschichtplatten die ionomere Zwischenschichtplatte ist.

13. Glaslaminat nach Anspruch 12, wobei die n Lagen n Lagen von dünnen Glasplatten sind und wobei die n-1 Lagen ionomere Zwischenschichtplatten sind, wobei jede der n Lagen von dünnen Glasplatten unabhängig eine Dicke von 0,1 bis 0,8 mm aufweist und jedes benachbarte Paar der dünnen Glasplatten durch eine der ionomeren Zwischenschichtplatten beabstandet ist.

## Revendications

1. Stratifié de verre comprenant une fine feuille de verre et une feuille d'intercouche ionomère, ladite fine feuille de verre ayant une épaisseur de 0,1 à 0,8 mm, la feuille d'intercouche ionomère comprenant un ionomère qui est un dérivé neutralisé ionique d'un copolymère d'acide précurseur comprenant des motifs copolymérisés d'une α-oléfine ayant de 2 à 10 atomes de carbone et de 18 à 30 % en pds de motifs copolymérisés d'un acide carboxylique α,β-éthyléniquement insaturé ayant de 3 à 8 atomes de carbone, sur la base d'un poids total du copolymère d'acide précurseur, 5 % à 90 % d'une teneur totale de l'acide carboxylique α,β-éthyléniquement insaturé présent dans le copolymère d'acide précurseur ayant été neutralisé, et en outre ledit ionomère ayant un module de Young de 200 à 600 MPa, tel que mesuré selon la norme ASTM D5026 à 30°C et avec 1 minute de durée de charge.

2. Stratifié de verre selon la revendication 1, le copolymère d'acide précurseur comprenant de 20 à 25 % en pds de motifs copolymérisés de l'acide carboxylique α,β-éthyléniquement insaturé, et de 10 % à 60 % de la teneur totale de l'acide carboxylique α,β-éthyléniquement insaturé présent dans le copolymère d'acide précurseur ayant été neutralisé.

3. Stratifié de verre selon la revendication 1, la feuille d'intercouche ionomère ayant une épaisseur de 1 à 120 mils (de 0,025 à 3 mm), préférablement de 5 à 45 mils (de 0,127 à 1,14 mm).

4. Stratifié de verre selon la revendication 1, la feuille d'intercouche ionomère ayant un premier côté et un second côté, et le premier côté étant lié directement à la fine feuille de verre.

5. Stratifié de verre selon la revendication 4, qui comprend en outre un film ou une feuille rigide, la feuille rigide comprenant un matériau ayant un module de tension de 690 MPa ou plus tel que déterminé selon la norme ASTM D-638, et ledit film ou ladite feuille rigide étant stratifié(e) au second côté de la feuille d'intercouche ionomère.

6. Stratifié de verre selon la revendication 5, le film comprenant un matériau polymère sélectionné dans le groupe constitué des polyesters, des polycarbonates, des polyoléfines, des polymères de norbornène, des polystyrènes, des copolymères de styrène-acrylate, des copolymères d'acrylonitrile-styrène, des polysulfones, des polyamides, des polyuréthanes, des polymères acryliques, des acétates de cellulose, des cellophanes, des polymères de chlorure de vinyle, des polymères fluorés, et des combinaisons de deux ou plusieurs de ces matériaux polymères; ou la feuille rigide comprenant un matériau sélectionné dans le groupe constitué d'un verre, d'un métal, d'une céramique, ou d'un matériau polymère sélectionné dans le groupe constitué des polycarbonates, des acryliques, des polyacrylates, des polyoléfines cycliques, des polystyrènes catalysés par un métallocène, et des combinaisons de deux ou plusieurs de ces matériaux.

7. Stratifié de verre selon la revendication 6, la feuille rigide étant une seconde feuille de verre, et ladite seconde feuille de verre ayant une épaisseur de 2 mm ou plus, ou la feuille rigide étant une seconde feuille de verre, et ladite seconde feuille de verre ayant une épaisseur de 1,5 mm ou moins.

8. Stratifié de verre selon la revendication 1, qui comprend en outre quatre bords périphériques et au moins un dispositif de montage, ledit au moins un dispositif de montage ayant sa première partie liée à la feuille d'intercouche ionomère et une seconde partie faisant saillie vers l'extérieur depuis les bords périphériques du stratifié de verre.

9. Stratifié de verre selon la revendication 8, ledit au moins un dispositif de montage comprenant en outre une troisième partie qui forme un recouvrement sur une partie du bord périphérique duquel il fait saillie,
ou la seconde partie dudit au moins un dispositif de montage comprenant au moins un moyen d'ancrage,
ou qui comprend deux dispositifs de montage, et les dispositifs de montage étant positionnés sur les bords périphériques opposés du stratifié de verre,
ou qui comprend quatre dispositifs de montage, et deux des dispositifs de montage étant positionnés sur un bord unique du stratifié de verre, et deux des dispositifs de montage étant positionnés sur le bord périphérique opposé du stratifié de verre,
ou qui comprend quatre dispositifs de montage, et chacun des dispositifs de montage étant positionné sur un bord périphérique différent du stratifié de verre.

10. Stratifié de verre selon la revendication 8, ledit au moins un dispositif de montage étant constitué de métal ou de plastique.

11. Stratifié de verre selon la revendication 10, ledit au moins un dispositif de montage comprenant un métal sélectionné dans le groupe constitué de l'acier, de l'aluminium, du titane, du laiton, du plomb, du chrome, du cuivre, et de leurs alliages.

12. Stratifié de verre selon la revendication 1 comprenant n couches de films, feuilles rigides, ou leurs combinaisons et n-1 couches de feuilles d'intercouche polymères, où (i) n est un nombre entier d'une valeur de 2 à 10; (ii) chaque paire adjacente des n couches de films, feuilles rigides, ou leurs combinaisons étant intercalée par l'une des feuilles d'intercouche polymères; (iii) une ou plusieurs des n couches de films, feuilles rigides, ou leurs combinaisons étant la fine feuille de verre ayant une épaisseur de 0,1 à 0,8 mm; et (iv) une ou plusieurs des n-1 couches des feuilles d'intercouche polymères étant la feuille d'intercouche ionomère.

13. Stratifié de verre selon la revendication 12, les n couches étant n couches de fines feuilles de verre, et les n-1 couches étant des feuilles d'intercouche ionomères, chacune des n couches des fines feuilles de verre ayant indépendamment une épaisseur de 0,1 à 0,8 mm, et chaque paire adjacente des fines feuilles de verre étant intercalée par l'une des feuilles d'intercouche ionomères.
